# EUROPEAN PATENT APPLICATION

(11) **EP 0 537 577 A1**
(43) Date of publication of application: **21.04.1993**
(21) Application number: 92116940.5
(22) Date of filing: 05.10.1992
(51) Int. Cl.: C08L 83/10, C08L 67/02, C08L 67/06, C08L 69/00

(54) **Transparent copolyester organosiloxane-polycarbonate block copolymer blends**

(30) Priority: 16.10.1991 US 778427
(71) Applicant: MILES INC., Pittsburgh, PA 15219-2502 (US)
(72) Inventor: Paul, Winfried G., Pittsburgh, PA 15237 (US); Lundy, Charles E., Pittsburgh, PA 15205-9741 (US); Krishnan, Sivaram, Pittsburg, PA 15241 (US)
(74) Representative: Müller, Gerhard, Dr.

(57) **Abstract**

A transparent thermoplastic molding composition having an improved impact performance is disclosed. The composition contains
(i) an organosiloxane-polycarbonate block copolymer having low siloxane content, and
(ii) a copolyester based on a glycol mixture of cyclohexane dimethanol and ethylene glycol.

The composition may optionally contain (iii) a homopolycarbonate.

## Description

### Field of the Invention

The invention relates to thermoplastic molding compositions and more particularly to compositions containing siloxane copolycarbonate and polyester resins.

### SUMMARY OF THE INVENTION

A transparent thermoplastic molding composition having an improved impact performance is disclosed. The composition contains
(i) an organosiloxane-polycarbonate block copolymer having low siloxane content, and
(ii) a copolyester based on a glycol mixture of cyclohexane dimethanol and ethylene glycol.

The composition may optionally contain (iii) a homopolycarbonate.

### BACKGROUND OF THE INVENTION

Thermoplastic molding compositions containing a polycarbonate resin and an amorphous polyester resin are known. In U.S. Patent 4,267,096 there is disclosed a relevant composition which contains an impact modifier. Also noted in this connection is U.S. Patent 4,125,572 which disclosed an optically clear composition having an improved level of light transmission containing a polycarbonate resin, a poly - (1,4-butylene terephthalate) polyester resin and a copolyester of a cycloaliphatic diol. In U.S. Patent 4,188,314 there is disclosed a composition containing a polycarbonate resin and a relevant copolyester based on cyclohexane dimethanol (CHDM). The compositions are said to have good clarity. Compositions containing a polycarbonate resin and a copolyester of cyclohexane dimethanol (CHDM) were disclosed in U.S. Patent 4,786,692. The disclosure notes that the transparency of the composition depends on whether the CHDM or the ethylene glycol predominates in the glycol portion of the polyester component. A substantially transparent composition is said to result upon a mixture which contains a polyester in which the diol component is CHDM.

Molding compositions containing a blend of polyalkylene terephthalate and a block copolycarbonate of organopolysiloxane are known. U.S. Patent 4,161,469 disclosed such compositions to have good impact performance and improved heat distortion temperature. However, the opacity of these compositions greatly limits the usefulness of these compositions.

### DETAILED DESCRIPTION OF THE INVENTION

In accordance with the present invention, a thermoplastic molding composition is provided containing
(i) 5 to 85, preferably 5 to 70 parts by weight (pbw) of an organosiloxane - polycarbonate block copolymer having low siloxane content, and
(ii) 95 to 15, preferably 95 to 30 parts by weight of a copolyester based on cyclohexanedimethanol. The composition may optionally contain
(iii) up to 70 parts by weight of a homopolycarbonate. The composition is characteristically transparent and features improved impact properties.

The organosiloxane-polycarbonate block copolymer of the invention, hereinafter siloxane copolycarbonate, conforms structurally to 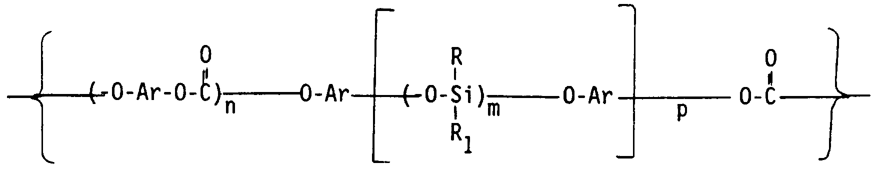
wherein n is an integer of from 1 to 1000, preferably 10-120, m is an integer of from 5 to about 120, preferably 5-100, p is an integer of about 1 to 3.

In the above formula, the siloxane substituents R and R₁ each denote independently C₁₋₂₀ alkyl, alkenyl, aryl,aralkyl or alkaryl, preferably methyl, ethyl, propyl, n- and tert.-butyl, chloromethyl, trifluoropropyl, phenyl, chlorophenyl and naphthyl, most preferably methyl. Ar denotes a mononuclear or polynuclear aromatic radical having 6 to 30 carbon atoms preferably 12-22. Both the aryl and alkyl radicals may be substituted by halogen atoms.

The block copolymer is characterized in that it contains 1 to 15 percent, preferably 2 to 10 percent, relative to its weight, of poly-(diorganosiloxane) blocks having an average block length of about 5 to 120, preferably 5 to 100. The copolymer is further characterized in that it has a weight average molecular weight of about 15,000 to 40,000.

The siloxane copolycarbonate of the invention may be prepared by known methods which entail a reaction of at least one dihydroxy compound of the formula

HO-Ar -OH

and at least one diorganosiloxane with terminal phenolic hydroxyl groups with phosgene or another suitable carbonate precursor in a two phase system in accordance with the well known diphasic polycondensation process. The dihydroxy compounds suitable in the process are the same as the ones described below as suitable for the preparation of polycarbonates. Similarly, the chain stoppers and branching agents mentioned below as suitable for the preparation of polycarbonate resins are suitable for the preparation of the siloxane copolycarbonate of the invention.

The copolyester of the invention has an inherent viscosity of about 0.45 to 1.0, preferably about 0.6 to about 0.85 and is based on
(a) at least one aromatic dicarboxylic acid selected from the group consisting of terephthalic acid, isophthalic acid and stilbenedicarboxylic acid, most preferably terephthalic acid, and
(b) a glycol portion which comprises a mixture of 1,4-cyclohexane-dimethanol and ethylene glycol. Preferably the mixture consists solely of 1,4-cyclohexane dimethanol and ethylene glycol.

Preferably, in the glycol portion the molar ratio of the 1,4-cyclohexanedimethanol to ethylene glycol is from about 9:1 to 2:1, most preferably the glycol portion comprise 80-90 % of 1,4-cyclohexanedimethanol relative to the molar amount of the glycol portion.

The polyester copolymer component (ii) may be prepared by procedures well known to those skilled in this art, such as by condensation reactions substantially shown and described in U.S. Patent No. 2,901,466. More particularly, the acid or mixture of acids or alkyl esters of the aromatic dicarboxylic acid or acids, for example dimethylterephthalate, together with the dihydric alcohols are charged to a flask and heat to temperatures sufficient to cause condensation of the copolymer to begin, for example to 175°-225°C. Thereafter the temperature is raised to about 250 to 300°C, and a vacuum is applied and the condensation reaction is allowed to proceed until substantially complete.

The condensation reaction may be facilitated by the use of a catalyst, with the choice of catalyst being determined by the nature of the reactants. The various catalysts for use herein are very well known in the art and are too numerous to mention individually herein. Generally, however, when an alkyl ester of the dicarboxylic acid compound is employed, an ester interchange type of catalyst is preferred, such as NaH, or Ti(OC₄H₉)₄ in n-butanol. If a free acid is being reacted with the free glycols, a catalyst is generally not added until after the preliminary condensation has gotten under way.

The reaction generally begins in the presence of an excess of glycols and initially involves heating to a temperature sufficient to cause a preliminary condensation followed by the evaporation of excess glycol. The entire reaction is conducted with agitation under an inert atmosphere. The temperature can then be advantageously increased with or without applying a vacuum. As the temperature is further increased, the pressure can be advantageously greatly reduced and the condensation allowed to proceed until the desired degree of polymerization is achieved. The product can be considered finished at this stage or it can be subjected to further polymerization in the solid phase in accordance with well-known techniques. Thus, the highly monomeric condensation product produced can be cooled, pulverized, and the powder heated to a temperature somewhat less than that employed during the last stage of the molten phase polymerization thereby avoiding coagulation of the solid particles. The solid phase polymerization is conducted until the desired degree of polymerization is achieved. The solid phase polymerization, among other things, results in a higher degree of polymerization without the accompanying degradation which frequently takes place when continuing the last stage of the melt polymerization at a temperature high enough to achieve the desired degree of polymerization. The solid phase process is advantageously conducted with agitation employing an inert atmosphere at either atmospheric pressure or under a greatly reduced pressure. Copolyesters of the preferred type are sold by the Eastman Kodak Company under the trademarks Tenite and KODAR PCTG.

The optional aromatic polycarbonate component of the present invention is homopolycarbonate or a copolycarbonate or a mixture thereof exclusive of the siloxane copolycarbonate described above.

The polycarbonates generally have a weight average molecular weight of 10,000-200,000, preferably 20,000-80,000 and their melt flow rate, per ASTM D-1238 at 300°C, is about 1 to about 65 gm/10 min., preferably about 2-15 gm/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph H. Schnell, "Chemistry and Physics of Polycarbonates", Interscience Publishers, New York, New York, 1964, all incorporated herein by reference).

In the present context, dihydroxy compounds suitable for the preparation of the polycarbonates of the invention conform to the structural formulae (1) or (2). 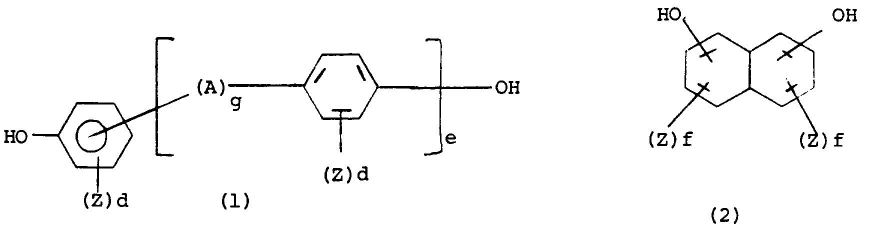
wherein
A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂- or a radical conforming to 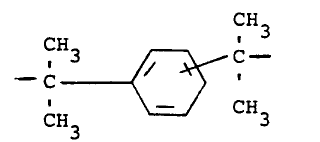
e and g both denote the number 0 to 1;
Z denotes F, Cl, Br or C₁-C₄-alkyl and if several Z radicals are substituents in one aryl radical, they may be identical or different from one another;
d denotes an integer of from 0 to 4; and
f denotes an integer of from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones, and α,α'-bis-(hydroxyphenyl)-diisopropyl-benzenes, 1,1-bis-(4-hydroxyphenyl)3,3,5-trimethyl cyclohexane as well as their nuclear-alkylated compounds. These and further suitable aromatic dihydroxy compounds are described, for example, in U.S. Patents 3,028,356; 2,999,835; 3,148,172; 2,991,273; 3,271,367; and 2,999,846, all incorporated herein by reference.

Further examples of suitable bisphenols are 2,2-bis-(4-hydroxy-phenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)-sulfone, dihydroxy-benzophenone, 2,4-bis-(3,5-dimethyl-4-hydroxyphenyl)-cyclohexane, α,α'-bis-(3,5-dimethyl-4-hydroxyphenyl)-p-diisopropylbenzene and 4,4'-sulfonyl diphenol.

Examples of particularly preferred aromatic bisphenols are 2,2,-bis-(4-hydroxyphenyl)-propane, 2,2-bis-(3,5-dimethyl-4-hydroxyphenyl)-propane and 1,1-bis-(4-hydroxyphenyl)-cyclohexane and 1,1-bis(4-hydroxyphenyl)-3,3,5-trimethylcyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention are included phenolphthalein-based polycarbonate, copolycarbomates and terpolycarbonates such as are described in U.S. Patents 3,036,036 and 4,210,741, both incorporated by reference herein.

The polycarbonates of the invention may also be branched by condensing therein small quantities, e.g., 0.05-2.0 mol % (relative to the bisphenols) of polyhydroxyl compounds. Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methylphenol; 2,4-dihydroxybenzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxybenzoic acid, trimesic acid, cyanuric chloride and 3,3-bis-(4-hydroxyphenyl)2-oxo-2,3-dihydroindole.

In addition to the polycondensation process mentioned above, other processes for the preparation of the polycarbonates of the invention are polycondensation in a homogeneous phase and transesterification. The suitable processes are disclosed in the incorporated herein by references, U.S. Patents 3,028,365; 2,999,846; 3,153,008; and 2,991,273.

The preferred process for the preparation of polycarbonates is the interfacial polycondensation process.

Other methods of synthesis in forming the polycarbonates of the invention such as disclosed in U.S. Patent 3,912,688, incorporated herein by reference, may be used.

Suitable polycarbonate resins are available in commerce, for instance, Makrolon 2400, Makrolon 2600, Makrolon 2800 and Makrolon 3100, all of which are bisphenol based homopolycarbonate resins differing in terms of their respective molecular weights and characterized in that their melt flow indices (MFR) per ASTM D-1238 are about 16.5-24, 13-16, 7.5-13.0 and 3.5-6.5 gm/10 min., respectively. These are products of Mobay Corporation of Pittsburgh, Pennsylvania.

A polycarbonate resin suitable in the practice of the invention is known and its structure and methods of preparation have been disclosed, for example in U.S. Patents 3,030,331; 3,169,121; 3,395,119; 3,729,447; 4,255,556; 4,260,731; 4,369,303 and 4,714,746 all of which are incorporated by reference herein.

The composition of the invention is transparent. In the context of the invention clear, transparent molded articles are characterized in having a total light transmittance per ASTM D1003 of higher than 70% and haze lower than 5% at 1/8" sample thickness. Opaque articles have either lower transmission and/or higher haze values.

The preparation of the compositions in accordance with the present invention follows conventional means. The compositions may contain any of the additives known in the polycarbonate art for their utility, including mold release agents and stabilizers of various kinds.

### Experimental

Thermoplastic molding compositions in accordance with the invention have been prepared and their properties determined. In the compositions described below the polycarbonate resin was Makrolon 2600, a homopolycarbonate based on bisphenol-A, having a relative viscosity of about 1.265, a product of Mobay Corporation. The siloxane-copolycarbonate used in the experiments had a relative viscosity of about 1.265 and contained 5% polydimethylsiloxane blocks, of an average degree of oligomerization of about 80. The copolyester used in the examples contained 81 mole % cyclohexanedimethanol. A minor amount of phosphite stabilizer having no criticality on the present context was included in the compositions.

| Components, Percent by weight | 1 | 2 |
|---|---|---|
| Polycarbonate, | 70.0 | - |
| Siloxane copolycarbonate, | -- | 70.0 |
| Copolyester, | 30.0 | 30.0 |
| Notched Izod, Impact Strength, 1/4" thickness, ft-lbs/inch | 1.7 | 14.6 |
| Appearance¹ | C | C |

| | | |
|---|---|---|
| 1) C = clear transparent | | |

In a second set of experiments shown below the siloxane copolycarbonate designated 50Si60 contained 50% polydimethylsiloxane blocks of degree of oligomerization of 60 and a relative viscosity of about 1.270. The corresponding siloxane copolycarbonate 10Si10 had a relative viscosity of 1.30, contained 10 % polydimethyl siloxane and had a degree of oligomerization of 10.

| Components, percent by weight | 3 | 4 | 5 |
|---|---|---|---|
| Polycarbonate | 40.0 | 20.0 | -- |
| 50Si60 | -- | -- | 6.0 |
| 10Si10 | -- | 20.0 | -- |
| copolyester | 60.0 | 60.0 | 94.0 |
| Appearance ¹ | C | C | O |
| Notched Izod, Impact Strength, 1/4" thickness, ft.lbs/inch | 2.0 | 14.7 | 9.0 |

| | | | |
|---|---|---|---|
| 1) C = clear transparent O = Opaque | | | |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A transparent thermoplastic molding composition having a total light transmittance higher than 70% and a haze value of lower than 5% as determined in accordance with ASTM D 1003 comprising
(i) 5 to 85 parts by weight of an organosiloxane - polycarbonate block copolymer having a weight average molecular weight of about 15,000 to 40,000 conforming to 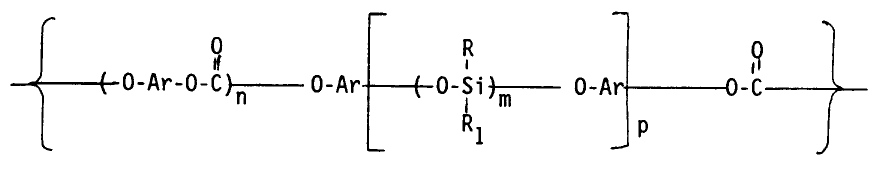 wherein n is an integer of from 1 to 1000, m is an integer of from 5 to about 120, p is an integer of about 1 to 3 and R and R₁ independently denote a C₁₂₋₂₀ alkyl, alkenyl, aryl, aralkyl or alkaryl radical and Ar denotes an aromatic radical having 6 to 30 carbon atoms, and
(ii) 95 to 15 parts by weight of a copolyester having an inherent viscosity of about 0.45 to 1.0 based on at least one aromatic dicarboxylic acid selected from the group consisting of terephthalic acid, isophthalic acid and stilbenedicarboxylic acid and on a glycol mixture containing 1,4-cyclohexanedimethanol and ethylene glycol having a molar ratio there between of about 9:1 to 2:1.

2. The composition of Claim 1 wherein said (i) is present in an amount of 5 to 70 pbw and said (ii) is present in an amount of 95 to 30 parts by weight.

3. The composition of Claim 1 wherein said copolyester has a viscosity of about 0.6 to 0.85.

4. The composition of Claim 1 wherein said copolymer is characterized in that it contains 2 to 10 percent, relative to its weight, of poly-(diorganosiloxane) blocks having an average block length of about 5 to 120.

5. The composition of Claim 4 wherein block length is 5 to 100.

6. The composition of Claim 5 wherein said glycol mixture contains 80 to 90 mole percent of 1,4 cyclohexanedimethanol.

7. The composition of Claim 6 further containing up to 70 percent of a homopolycarbonate resin.

8. The composition of Claim 7 wherein said dicarboxylic acid is terephthalic acid.

9. The composition of Claim 1 wherein said glycol mixture contains 80 to 90 mole percent of 1,4 cyclohexanedimethanol and said dicarboxylic acid is terephthalic acid.

10. The composition of Claim 9 further containing up to 70 percent of a homopolycarbonate resin.
